(19) Europäisches Patentamt
European Patent Office
Office européen des brevets

(11) EP 1 611 178 B1

(12) **FASCICULE DE BREVET EUROPEEN**

(45) Date de publication et mention de la délivrance du brevet:
**23.01.2008 Bulletin 2008/04**

(21) Numéro de dépôt: **04742409.8**

(22) Date de dépôt: **31.03.2004**

(51) Int Cl.:
*C08G 18/70* (2006.01) *C08G 18/08* (2006.01)

(86) Numéro de dépôt international:
**PCT/FR2004/000808**

(87) Numéro de publication internationale:
**WO 2004/092242 (28.10.2004 Gazette 2004/44)**

(54) **COMPOSITIONS A BASE D ISOCYANATE, LEUR PROCEDE D UTILIS ATION POUR REALISER DES ADHESIFS ET JOINTS DE COLLE AROMATIQUE AINSI OBTENUS**

ZUSAMMENSETZUNG AUS ISOCYANATEN, IHRE VERWENDUNG ZUR HERSTELLUNG VON KLEBSTOFFEN, UND DIE DAMIT HERGESTELLTEN AROMATISCHEN KLEBEFUGEN

COMPOSITIONS MADE FROM ISOCYANATE, METHOD FOR USE THEROF FOR THE PRODUCTION OF ADHESIVES AND AROMATIC GLUE JOINTS THUS OBTAINED

(84) Etats contractants désignés:
**AT BE BG CH CY CZ DE DK EE ES FI FR GB GR HU IE IT LI LU MC NL PL PT RO SE SI SK TR**

(30) Priorité: **08.04.2003 FR 0304343**

(43) Date de publication de la demande:
**04.01.2006 Bulletin 2006/01**

(73) Titulaire: **RHODIA CHIMIE**
**92512 Boulogne-Billancourt Cedex (FR)**

(72) Inventeurs:
- **GRANIER, Vincent**
**F-69390 Vernaison (FR)**
- **VARRON, Corinne**
**F-69003 Lyon (FR)**

(74) Mandataire: **Dubruc, Philippe**
**Rhodia Services,**
**Direction de la Propriété Industrielle,**
**40, rue de la Haie-Coq**
**93306 Aubervilliers Cedex (FR)**

(56) Documents cités:
**WO-A-01/05861**
**WO-A-99/07765**
**WO-A-99/10402**
**WO-A-99/55756**
**FR-A- 2 745 577**
**FR-A- 2 760 242**

Il est rappelé que: Dans un délai de neuf mois à compter de la date de publication de la mention de la délivrance du brevet européen, toute personne peut faire opposition au brevet européen délivré, auprès de l’Office européen des brevets. L’opposition doit être formée par écrit et motivée. Elle n’est réputée formée qu’après paiement de la taxe d’opposition. (Art. 99(1) Convention sur le brevet européen).

EP 1 611 178 B1

## Description

La présente invention a pour objet des composés et des compositions à base d'isocyanate (qui peuvent être partiellement masqués, mais cela n'est pas la mise en oeuvre préférée). Elle vise également leur procédé d'utilisation, leur utilisation pour réaliser des adhésifs, notamment des joints de colle ainsi obtenus. Elle concerne plus particulièrement les compositions (auto)dispersables en phase aqueuse, notamment pour coller bois et élastomère.

Pour mieux comprendre l'invention il a paru opportun de faire les rappels suivants.

Dans la présente description, les caractéristiques de granulométrie font souvent référence à des notations du type $d_n$ où n est un nombre de 1 à 99, cette notation est bien connue dans de nombreux domaines techniques, mais est un peu plus rare en chimie, aussi peut-il être utile d'en rappeler la signification. Cette notation représente la taille de particule telle que n% (en poids, ou plus exactement en masse, puisque le poids n'est pas une quantité de matière mais une force) des particules soit inférieur ou égal à ladite taille.

Dans la suite de la description, on utilisera l'indice de polydispersité, lequel est défini comme :

$$"I" = (d_{90}-d_{10})/d_{50}$$

Pendant longtemps on a utilisé largement des solvants dans l'industrie des adhésifs, toutefois l'utilisation de solvants organiques est de plus en plus souvent critiquée par les autorités en charge de la sécurité du travail, car ces solvants, ou du moins certains d'être eux, sont réputés toxiques ou chronotoxiques.

C'est une des raisons pour laquelle on essaye de développer de plus en plus des techniques qui se substituent aux techniques en milieu solvant pour pallier les inconvénients afférents aux solvants.

Pour diminuer l'utilisation de solvant organique, dont la présence est réputée toxique pour ceux qui le manipulent et néfaste pour l'environnement l'on a proposé de mettre au point des adhésifs en phase aqueuse.

Dans leur grande majorité, ce type d'adhésifs est constitué de polymère(s), le plus souvent sous la forme de dispersion, dans une phase aqueuse dont l'évaporation provoque le collage.

Toutefois, il est apparu que les propriétés d'adhérence des joints de colle obtenus par cette sorte d'adhésif pouvaient être significativement accrue par la présence d'isocyanate dispersé dans ladite phase aqueuse. Le mécanisme de cette potentialisation n'est pas complètement élucidé.

Ainsi modifiée ces dispersions constituent une nouvelle classe d'adhésif, et sont formées d'une dispersion double dans la même phase aqueuse d'une part de polymère(s) (soluble ou le plus souvent en dispersion) et d'autre part d'isocyanate dispersé.

En général cette dispersion mixte est obtenue soit par le mélange de la phase aqueuse vectrice de polymère avec une émulsion d'isocyanate ; soit par la mise en émulsion directe de l'isocyanate dans la phase aqueuse porteuse du polymère.

C'est cette dernière technique qui est la plus désirée.

Malgré l'intérêt de cette technique, il y a peu de choix dans la palette des compositions à base d'isocyanate (s) aptes à cette utilisation et ce parce qu'ils doivent répondre à des contraintes variées et que choix des émulsifiants est critique.

FR 2 745 577 décrit une composition utile en synthèse organique contenant un ou plusieurs isocyanates et un composé comportant une fonction anionique et un fragment de chaîne polyéthylène glycol.

WO99/10402 divulgue un procédé de synthèse en émulsion de (poly)isocyanates masqués par mise en contact d'une composition isocyanate avec au moins un agent masquant, en présence d'un agent tensio-actif et d'une phase aqueuse.

FR 2 760 242 a pour objet une composition pour revêtement de surfaces extérieures comprenant une solution ou dispersion aqueuse de polyol(s), et une sous-composition isocyanate émulsifiée ou émulsifiable dans la même phase aqueuse.

Dans le document WO01/05861 est décrite l'application sur un substrat d'une émulsion de (poly)isocyanates masqués qui réagit, dans des conditions de réticulation avec un polyol, afin de conférer audit substrat une bonne résistance mécanique.

WO99/07765 traite d'un procédé de préparation d'une composition (poly)isocyanate à viscosité réduite comprenant au moins un isocyanate dimère à fonctions urétidine-dione préparées à partir d'isocyanates monomères chauffés en l'absence de catalyseur de dimérisation.

WO99/55756 divulgue un procédé de préparation d'une composition d'isocyanates polyfonctionnels tricondensats, ledit procédé consistant à ajouter un allophanate à un isocyanate polyfonctionnel tricondensat.

Ainsi il faut que la technique de mise en émulsion de la composition isocyanate soit compatible avec le milieu vecteur du polymère pour éviter d'une part la réduction de la durée pendant laquelle la dispersion peut être utilisée pour

le collage et d'autre part une démixtion avec éventuellement séparation de phase. Cela implique à la fois une stabilité physique des dispersions et d'autre part une certaine stabilité chimique. -

En effet, usuellement lorsque l'on utilise des isocyanates non ou incomplètement masqués, sous la forme d'émulsion aqueuse, la durée pendant laquelle ils sont utilisables reste inférieure à quelques heures, en général une ou deux heures. Il est important d'éviter que l'emploi de nouveaux agents émulsifiant, ne se traduise par une durée de vie moindre.

Le problème est d'autant plus délicat que la diversité des polymères adhésifs utilisés est grande et que leurs caractéristiques dépendent de la surface à coller.

Enfin, il est fréquent que les joints de colle obtenus par adhésif en phase aqueuse, et notamment en dispersion, présentent une moindre adhérence en milieu humide.

En outre beaucoup de tensioactifs sont réputés altérer la solidité du lien entre le revêtement et son support. De ce fait ils sont connus et utilisés pour défavoriser l'accrochage entre un polymère et un support.

C'est pourquoi un des buts de la présente invention est de fournir une composition isocyanate qui puisse être aisément émulsifié dans une grande palette de conditions.

Un autre but de la présente invention est de procurer une composition isocyanate qui pallie les problèmes d'adhérence en milieu humide.

Ces buts et d'autres qui apparaîtront par la suite sont atteints au moyen de l'utilisation dans les adhésifs d'une composition émulsionnable d'isocyanate comportant :

- une composition isocyanate d'une teneur massique en fonction N=C=O 10% et 30% (bornes comprises), avantageusement de 15 à 25% (bornes comprises) d'une viscosité au plus égale à 2 500 mPa.s, avantageusement à 1 500 mPa.s, de préférence à 1 400 mPa.s, et même à 1 200 mPa.s, dont la taille de particule $d_{50}$ soit au plus égale à 25 μm, de préférence à 22 μm, pour un indice de polydispersité au plus égal à 1,5, avantageusement au plus égal à 1,3 ;
- un agent tensioactif comportant comme constituant principale un composé

ou mélange de composés de formule générale :

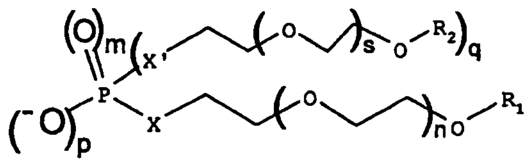

où:

- p représente un entier entre 1 et 2 (intervalles fermés, c'est-à-dire comprenant les bornes) ;
- m représente zéro ou 1;
- q est choisi entre zéro et un :

- la somme p + m + q est au plus égale à 3 ;
- la somme 1 + p + 2m + q est égale à 3 ou à 5, avantageusement à 5 ;
- X est un oxygène ou une liaison simple ;
- X' est un oxygène ou une liaison simple ;
- n et s, semblables ou différents, représentent un entier choisi entre 5 et 30, avantageusement entre 5 et 25, de préférence entre 9 et 20 (intervalles fermés, c'est-à-dire comprenant les bornes), où $R_1$ et $R_2$, différents ou avantageusement identiques, sont choisis parmi les radicaux aryliques éventuellement substitués.

Avantageusement l'un des X et X' est oxygène, de préférence les deux sont oxygène.

Il est préférable qu'en cas de mélange de composés de formule (I), la majorité (au moins 50 %) d'entre eux en mole réponde à la formule (I) avec « q » valant 0 (c'est-à-dire monoester phosphorique ou phosphonate) pour donner la formule (II) :

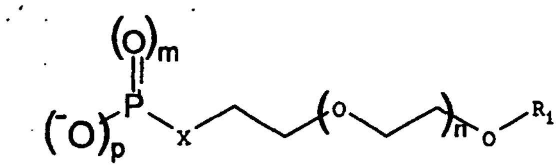

avec :

- « m » étant égal à 0 ou 1, de préférence 1
- « p » valant 2.

Lorsque l'on utilise un mélange de composés, les valeurs qui sont des valeurs entières pour une molécule définie deviennent des valeurs qui peuvent être fractionnaires.
Ainsi dans la formule (I), q, p, et surtout n et s, deviennent des valeurs statistiques.
La composition émulsionnable devient alors une composition émulsionnable d'isocyanate comportant :

- une composition isocyanate d'une teneur massique en fonction N=C=O comprise entre 15 et 25% d'une viscosité au plus égale à 1 500 mPa.s, avantageusement à 1 400 mPa.s de préférence à 1 200 mPa.s dont la taille de particule $d_{50}$ soit au plus égale à 25 μm, de préférence à 22 μm, pour un indice de polydispersité au plus égal à 1,5, avantageusement au plus égal à 1,3;
- un agent tensioactif comportant comme constituant principal un composé

ou mélange de composés de formule générale moyenne :

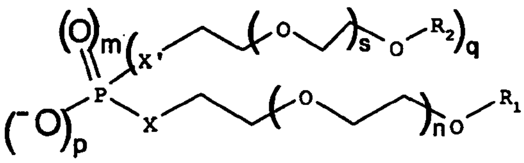

où:

- p représente une valeur entre 1 et 2 (intervalles fermés, c'est-à-dire comprenant les bornes) ;
- m représente 0 ou 1, avantageusement 1 ;
- la somme p + m + q est égale à 3 ;
- la somme 1 + p + 2m + q est égale à 3 ou à 5, avantageusement à 5 ;
- X est un oxygène ;
- X' est un oxygène;
- n et s ont la même valeur statistique, choisie entre 5 et 30, avantageusement entre 5 et 25, de préférence entre 9 et 20 (intervalles fermés, c'est à dire comprenant les bornes) ; où $R_1$ et $R_2$, identiques, sont choisis parmi les radicaux aryliques éventuellement substitués.
  $R_1$ et $R_2$ représentent le plus souvent un alcoylaryle de 10 à 20 atomes de carbone, notamment un nonylphényle.
  Il est à noter que le rapport statistique « q » qui est choisi dans l'intervalle fermé allant de zéro à 1, est aisément déterminé par dosage acido-basique.
  Il est souhaitable alors, que « q » statistique soit au plus égal à 0,5, avantageusement à 0,3, de préférence à 0,2.
  Dans ce cas, la formule moyenne est en nombre (nombre total de chaque type de motif ou d'atome divisé par le nombre de molécules), les proportions de chaque molécule étant mesurées par chromatographie liquide, le cas échéant, pour les molécules lourdes par perméation de gel, le cas échéant complété par la technique dite MALDITOF.
  Ces composés sont susceptibles d'être obtenus par estérification partielle d'acides phosphorés, avantageusement phosphorique par des polyoxydes d'éthylène (à s et n motif) terminés par une fonction alcool et commencés par un phénol ($R_1$ et $R_2$), avantageusement phénol, avantageusement substitué, de préférence par une chaîne carbonée, laquelle est avantageusement alcoyle.
  Le rapport massique entre, d'une part, lesdits composés de formule (I) (numérateur) et, d'autre part, les isocyanates à mettre en suspension, est le plus souvent au plus égal à environ 0,1, avantageusement à 0,10. Dans la présente

description, le terme "environ" est employé uniquement pour mettre en exergue le fait que les valeurs données correspondent à un arrondi mathématique et que, lorsque le, ou les, chiffre(s) les plus à droite d'un nombre sont des zéros, ces zéros sont des zéros de position et non des chiffres significatifs, sauf, bien entendu, s'il en est précisé autrement.

Le rapport massique entre les isocyanates à mettre en suspension et les composés de formule (I) est avantageusement supérieur à 1 %, de préférence à 2%.

Le caractère autoémulsionnable qui constitue un avantage dans ces utilisations apparaît à partir d'un rapport massique d'environ 3% en présence d'un composé émulsifiant d'autres types et d'environ 5% lorsque les composés de formule (I) représentent au moins 90% en masse de l'ensemble des tensioactifs utilisés comme émulsifiants.

Il est également souhaitable que la quantité dudit, ou desdits, composé(s) de formule (I) corresponde à une valeur comprise entre $10^{-2}$ et 1, avantageusement entre $5.10^{-2}$ et 0,5 atome de phosphore par litre.

Ainsi le rapport massique entre, d'une part, les composés de formule (I) (numérateur) et, d'autre part, les isocyanates à mettre en suspension (dénominateur), est avantageusement au moins égal à 2%, de préférence à 4%, et au plus égal à environ 15%, de préférence à 10%, ainsi ce rapport massique est avantageusement compris entre environ 2 et 15%, de préférence entre environ 4% et 10% (2 chiffres significatifs) ; ces intervalles sont fermés, c'est-à-dire qu'ils contiennent les bornes).

Selon la présente invention, lesdits composés peuvent être utilisés seuls ou en mélange avec un ou plusieurs agents tensioactifs.

Ces éventuels agents tensioactifs peuvent également être choisis parmi d'autres composés ioniques [notamment sulfate ou phosphate d'aryle(s) et/ou d'alcoyle(s) (bien entendu aryle englobe notamment les alcoylaryles et alcoyle englobe notamment les aralcoyles), les aryl- ou alcoyl-phosphonate, -phosphinate, sulfonate, sel d'acide gras et/ou zwitterionique] et parmi les composés non-ioniques ceux bloqués en bout de chaîne ou non. Toutefois les composés non ioniques présentant des fonctions alcooliques sur au moins l'une des chaînes semblent avoir un effet légèrement défavorable sur l'(auto)émulsion même s'ils ont un effet favorable sur d'autres aspects de la composition ; compte tenu de cela, il est préférable que la teneur en ce type de composé représente au plus 1/3, avantageusement au plus 1/5, de préférence au plus 1/10 en masse desdits composés anioniques selon l'invention.

Le contre-cation (ou les contre cations) assurant la neutralité électrique des composés selon l'invention est avantageusement monovalent et est choisi parmi les cations minéraux et les cations organiques avantageusement non nucléophiles et par voie de conséquence de nature quaternaire ou tertiaire [notamment « oniums » de colonne V tels que phosphoniums, ammoniums (y compris amines protonées), voire de colonne VI, tels que sulfoniums, ...] et leurs mélanges, le plus souvent ammoniums, en général issus d'une amine, avantageusement tertiaire. Avantageusement, on évite que le cation organique présente un hydrogène réactif avec la fonction isocyanate. D'où la préférence vis-à-vis des amines tertiaires.

Les cations minéraux peuvent être séquestrés par des agents de transfert de phases comme les éthers couronnes

Le pKa dans l'eau des cations issu de la protonation des bases neutres (organique [ammonium ...] ou minéraux) est avantageusement au moins égal à 7, de préférence à 8, et au plus à égal à 14, de préférence à 12, plus préférentiellement à 10.

Les cations, et notamment les amines correspondant aux ammoniums (amines protonées dans ce cas), ne présentent avantageusement pas de propriété tensioactive mais il est souhaitable qu'elles présentent une bonne solubilité en tout cas suffisante pour assurer celle desdits composés présentant un groupement fonctionnel et une chaîne polyoxygénée, en phase aqueuse et ce, à la concentration d'emploi.

Les amines tertiaires, les ammoniums ou phosphoniums quaternaires présentant au plus 16, avantageusement 12 atomes, avantageusement au plus 10 atomes, de préférence au plus 8 atomes de carbone par fonction "onium" (rappelons qu'il est préféré qu'il n'y en ait qu'une par molécule) sont préférées.

Les amines peuvent comporter d'autres fonctions et notamment les fonctions correspondant aux fonctions des acides aminés et des fonctions éthers cycliques comme la N-méthylmorpholine, ou non. Ces autres fonctions sont avantageusement sous une forme qui ne réagit pas avec les fonctions isocyanates et n'altèrent significativement pas la solubilité en phase aqueuse.

Il est très souhaitable que les composés anioniques selon la présente invention soient sous une forme neutralisée telle que le pH qu'elle induit lors d'une dissolution ou d'une mise en contact dans l'eau soit au moins égal à 3, avantageusement à 4, de préférence à 5 et au plus égal à 12, avantageusement à 11, de préférence à 10.

Ainsi il est préférable que seules les fonctions acides fortes ou moyennes (c'est-à-dire dont le pKa est au plus égal à 4) soient neutralisées quand il y en a plus d'une. Les acidités faibles, c'est-à-dire dont le pKa est au moins égal à 5, peuvent être partiellement neutralisées.

Comme cela a été mentionné précédemment d'une manière plus générale, il est préférable que les composés où « q » est égal 0 soient largement majoritaires. Ainsi lorsque le phosphore est un phosphore V (c'est-à-dire 2m + p +

q = 5) et que les composés du mélange sont esters, il est souhaitable d'utiliser des mélanges de monoester(s) et de diester(s) dans un rapport molaire monoester(s)/diester(s) supérieur à 2, avantageusement à 3, de préférence à 4, plus préférentiellement à 5, voire à 10.

Les agents émulsifiants selon l'invention, notamment les mélanges ci-dessus, peuvent en outre comporter de 1 %, jusqu'à environ 20% (il est toutefois préférable que cela ne dépasse pas environ 10%), en masse d'acide phosphorique et/ou acide phosphoreux (qui seront avantageusement salifiés au moins en partie de manière à être dans les zones de pH préconisées) et de 0 à 5% d'esters de l'acide pyrophosphorique. Si techniquement la présence d'acide phosphoreux est possible, certains de ses dérivés sont réputés toxiques, il est donc avisé d'éviter cet acide, surtout dans les cas où il risque de se former des dérivés réputés toxiques.

La composition peut comporter en outre un catalyseur avantageusement latent (libérable par action des agents extérieurs, par exemple rayonnement visible ou U.V., oxygène).

Selon la présente invention, il est possible de réaliser aisément une émulsion et notamment une émulsion huile dans eau stable.

Il est certes possible d'obtenir une émulsion eau dans huile, mais une telle émulsion n'est chimiquement pas stable, les émulsions eau dans huile favorisant une décomposition dangereuse parce que parfois brutale des fonctions isocyanates. Pour éviter ce problème, il est avisé de faire l'addition de la composition isocyanate selon l'invention dans la phase aqueuse et non l'inverse.

Les phases aqueuses porteuses des polymères adhésifs présentent souvent une propriété tensioactive non négligeable. Ainsi il n'est pas rare que la composition émulsionnable d'isocyanate soit auto-émulsionnable dans la phase aqueuse porteuse du, ou des, polymère(s) adhésif(s) tandis qu'elle ne l'est pas dans de l'eau pure.

Ainsi, lorsque la concentration en agent tensioactif est basse, il peut arriver qu'il y ait une démixtion en deux dispersions (en général des émulsions) : l'une « huile dans eau » surmontée de l'autre qui est « eau dans huile ». Comme cela a été mentionné précédemment et sera développé ultérieurement, cette dernière est souvent chimiquement instable avec dégagement de gaz carbonique (bioxyde de carbone) du à l'hydrolyse de fonction isocyanate par l'eau. Cette situation peut être palliée par une agitation plus vigoureuse ou mieux par l'augmentation de la teneur en agent émulsifiant.

La teneur de composition isocyanate dans la dispersion finale varie de 1 à environ 20%, avantageusement de 2 à 15%, de préférence de 3 à 10%, (intervalles fermés, c'est-à-dire contenant les bornes).

Il est souhaitable que la composition d'isocyanate selon l'invention après mise en dispersion ou émulsion dans une phase aqueuse, présente une teneur en eau d'au plus 95%, avantageusement d'au plus 90%, de préférence d'au plus 85% et d'au moins 25%, avantageusement d'au moins 30%, de préférence au moins 35%. Il est ainsi possible d'obtenir des émulsions riches en matière solide.

La teneur en solvant représente avantageusement au plus 20% en masse, de préférence au plus 10%, plus préférentiellement au plus 5%, et même moins de 1 % de la dispersion finale (c'est-à-dire prête à l'emploi pour coller).

Selon une mise en oeuvre particulièrement avantageuse de la présente invention, après mise en dispersion ou émulsion de la composition isocyanate, la somme des constituants du liant (c'est-à-dire des teneurs en masse du, ou des, isocyanate(s), des émulsifiants et de polymère(s) [avantageusement à fonction(s) porteuse(s) d'hydrogène réactif avec les fonctions isocyanates, notamment polyols]), dans l'eau varie de 20%, de préférence de 30% à 60%, de préférence 50% par rapport à la totalité de la composition.

En particulier le taux de matière solide peut atteindre des valeurs au moins égale à 40%, et même à 50%, voire 60%, mais il est en général inférieur à 80%.

Pour revenir au problème de mise en émulsion, au cours de l'étude qui a mené à la présente invention, en particulier dans le cas des isocyanates aliphatiques (c'est-à-dire reliés au squelette hydrocarboné (c'est-à-dire contenant à la fois de l'hydrogène et du carbone) par l'intermédiaire d'un carbone saturé ($sp^3$), il a été montré qu'il y avait un risque d'emballement de diverses réactions lorsque certaines proportions d'eau était atteintes. Aussi est-il avisé d'éviter des compositions où le rapport massique entre, d'une part, la quantité d'eau dans la phase aqueuse et, d'autre part, la somme de l'isocyanate et du tensioactif selon l'invention, est compris entre $10^{-2}$ et 1/2 (0,5). Si l'on désire plus de sûreté, on évitera les rapports compris entre $10^{-3}$ et 1. Pour empêcher tout passage dans cette zone dangereuse, il est conseillé de réaliser l'émulsion en ajoutant la composition émulsionnable d'isocyanate dans la phase aqueuse et non l'inverse.

Il est préférable d'utiliser des compositions isocyanate d'une viscosité au plus égale à 1 500 mPa.s, avantageusement à 1 200 mPa.s, de préférence 1 000 mPa.s.

Au cours de l'étude qui a mené à la présente invention, il a été montré que la taille (la granulométrie) des émulsions jouait un grand rôle dans la qualité de l'adhérence finale. Plus particulièrement, est importante la polydispersité de l'émulsion de la composition isocyanate lorsque cette dernière est seule et lorsqu'elle est avec le polymère adhésif.

Ainsi dans le cas de l'isocyanate seul, la taille de particule $d_{50}$ est au plus égale à 25, de préférence à 22 $\mu$, pour un indice de polydispersité au plus égal à 1,5, avantageusement à 1,3, de préférence à 1,1.

Dans le cas où l'on disperse l'isocyanate (ou plus précisément la composition émulsionnable d'isocyanate) dans la phase du polymère, la monodispersité est plus difficile à atteindre, mais les résultats des composés selon l'invention constituent un progrès significatif.

Les isocyanates visés par l'invention comporte notamment les composés détaillés ci après.

Ces composés peuvent avantageusement contenir les structures connues dans ce domaine par exemple les « prépolymères » issus de la condensation de polyol (Par exemple triméthylol propane) en général triol (avantageusement primaire) et surtout les plus courantes, à savoir les oligomères tels à motifs isocyanurates (encore appelés trimères), ceux à structure urétidinedione (encore appelés dimères), des structures biuret ou allophanate ou une combinaison de ce type de structures sur une seule molécule ou en mélange.

Si l'on désire abaisser fortement la teneur en solvant de la composition, notamment lorsqu'elle est sous forme d'émulsion, il est préférable d'utiliser des mélanges de ce type naturellement (c'est-à-dire sans adjonction de solvant) de basse viscosité.

Les composés présentant cette propriété sont surtout les dérivés (type isocyanurate, encore appelés trimères, des structures urétidinediones, encore appelés dimères, des structures biurets ou allophanates ou une combinaison de ce type de structures sur une seule molécule ou en mélange) en partie et/ou en totalité des isocyanates aliphatiques dont les fonctions isocyanates sont reliées au squelette par l'intermédiaire de fragments éthylène [par exemple des polyméthylènediisocyanates, notamment l'hexaméthylènediisocyanate et ceux des arylènedialcoylènediisocyanates dont la fonction isocyanate est distante des noyaux aromatiques d'au moins deux carbones tels que (OCN-$[CH_2]_t$-□-$[CH_2]_u$-NCO) avec t et u supérieur à 1].

Ainsi on utilise avantageusement des composition isocyanates a) qui comportent au moins 50%, avantageusement 70%, en masse d'oligomères choisis parmi les hétéro- ou homooligomères dont au moins un des monomères est un monomère aliphatique, avantageusement dont tous les monomères sont des monomères aliphatiques choisis parmi ceux porteurs d'au moins deux fonctions isocyanates et dont le squelette, sur le trajet le plus court joignant deux fonctions isocyanates comportent au moins un enchaînement polyméthylène d'au moins deux maillons méthylène $(CH_2)\pi$ ($\pi \geq 2$), exocyclique lorsque le monomère comporte un cycle.

On considère comme oligomères les composés présentant une masse d'au plus environ 1 600, soit pour l'hexaméthylène diisocyanate, environ au plus dix motifs diamines précurseurs de fonctions isocyanates. Dans ledit enchaînement polyméthylène d'au moins deux maillons méthylène $(CH_2)_\pi$, $\pi$ représente un entier de 2 à 10, avantageusement de 4 à 8.

Lesdits oligomères sont avantageusement choisis parmi les homooligomères d'hexaméthylène diisocyanate.

Ces composés ou mélanges ont avantageusement une viscosité au plus égale à environ 2 000 centipoises (ou milliPascal.seconde), de préférence à environ 1 500 centipoises (ou millipascal.seconde).

Lorsque ces valeurs ne sont pas atteintes, il est alors souvent utile d'amener le mélange à ces valeurs de viscosité par l'adjonction d'une quantité minimale de solvant(s) approprié(s).

Les solvants les plus appropriés pour être compatibles avec l'application sont ce qu'il convient d'appeler des solvants réactifs (car ils ont ces deux caractéristiques).

Comme solvants réactifs, on peut citer les monomères aliphatiques di- et tri-isocyanates, voire tétra-isocyanates, de masse moléculaire au moins égale à 200 (2 chiffres significatifs), avantageusement à 250, de viscosité au plus égale à 500 mPa.s. Parmi ce type de solvant, on peut mentionner ceux dérivés d'ester d'acides diaminés, tels la lysine et l'ornithine, et notamment le LDI (Lysine Di-Isocyanate, issu d'ester de la lysine), LTI (Lysine Tri-Isocyanate, issu de l'ester de la lysine avec l'éthanolamine), et les alcanes trisubstitués tels le NTI (NonylTri-Isocyanate $OCN-(CH_2)_4-CH(CH_2-NCO)-(CH_2)_3-NCO$) l'UTI (Undécyle Tri-Isocyanate $OCN-(CH_2)_5-CH(-NCO)-(CH_2)_5-NCO$) quoique non développés à l'échelle industrielle les tétra-isocyanates issus d'ester double de diols [tel que glycols, propanediols (notamment le 1,3), butanediols (notamment le 1,4), pentanediols, (notamment le 1,5)], d'acides diaminés, donnent de bons résultats.

Comme solvants réactifs, on peut également citer les dimères de polyméthylène di-isocyanate éventuellement substitués sur un méthylène par un éthyle ou un méthyle (à cycle urétidinedione), les bis-dimères (trimères à deux cycles urétidinediones), et leurs mélanges entre eux et, le cas échéant, avec les tris-dimères (tétramères à trois cycles urétidinediones). De tels mélanges peuvent être faits par chauffage des monomères (voir demande de brevet internationale publiée sous le n° WO99/07765).

Comme solvants réactifs, on peut également citer les monoallophanates de polyméthylènedi-isocyanate éventuellement substitués sur un méthylène par un éthyle ou un méthyle (dicondensat avec un monoalcool), les deux sortes de bis-allophanates (tétracondensat avec un diol, ou de préférence tricondensat avec deux monoalcools à deux fonctions allophanates), et leurs mélanges entre deux ou les trois espèces spécifiées. Pour la synthèse de ce type de produit l'on peut se référer à la demande de brevet internationale publiée sous le n° WO 99/55756.

On peut bien évidemment utiliser des mélanges des divers types de solvant réactifs ci dessus.

En d'autres termes, on peut ajuster la viscosité de la composition isocyanate avant mélange avec l'agent d'émulsification à une valeur de, au plus égale à environ 2 500 centipoises (ou mPa.s c'est-à-dire milliPascal.seconde), avantageusement à 2 000 mPa.s, de préférence à environ 1 500 centipoises (ou milliPascal.seconde), plus préférentiellement 1 200, encore plus préférentiellement 1 000 mPa.s, en ajoutant au moins un des composés ci-dessus ; à savoir en réalisant un coupage avec une composition isocyanate de viscosité au plus égale à 1 200 mPa.s et inférieur à la viscosité désirée (c'est-à-dire respectivement 3 000, 2 000, 1 500 et 1 000 mPa.s), avantageusement choisie parmi :

■ celles comportant au moins 10% en masse d'au moins un monomère aliphatique di- et poly-isocyanate de masse moléculaire supérieure à 200, avantageusement à 250, de viscosité au plus égale à 500 mPa.s ;
■ celles comportant au moins 10% en masse d'au moins un dérivé à cycle urétidinedione choisi parmi les dimères et les bis-dimères de polyméthylène di-isocyanate éventuellement substitué sur un méthylène par un éthyle ou un méthyle, de viscosité au plus égale à 500 mPa.s ;
■ celles comportant au moins 10% en masse d'au moins un allophanate choisi parmi les monoallophanates de polyméthylènedi-isocyanate éventuellement substitués sur un méthylène par un éthyle ou un méthyle, de viscosité au plus égale à 500 mPa.s ;
■ celles formées par le mélange des trois types de compositions ci-dessus, de viscosité au plus égale à 500 mPa.s.

Ainsi que déjà mentionnés ci-dessus, les isocyanates concernés peuvent être des mono-, di- voire poly-isocyanates. Avantageusement, ces dérivés peuvent contenir des structures de type isocyanurate, encore appelées trimères, des structures urétidinedione, encore appelées dimères, des structures biuret ou allophanate ou une combinaison de ce type de structures sur une seule molécule ou en mélange. Il convient de souligner que les monomères trifonctionnel tels le LTI (Lysine TriIsocyanate) et le NTI (NonylTri-Isocyanate) sont la plupart du temps utilisé tels quel, mais peuvent être oligomérisés.

Les isocyanates monomères sont issus en général de diamines transformées en diisocyanates par carbonatation ; cette opération est dans la grande majorité des cas réalisée par l'action du phosgène ou des réactifs équivalents ; on retrouve bien évidemment les motifs diamine dans les composés issus de d'oligocondensation (par exemple dimères, trimères, allophanates, uréthannes, urées et biurets, ...). Ces monomères peuvent être notamment :

⇒ aliphatiques, y compris cycloaliphatiques et arylaliphatiques, tels que :

- comme aliphatiques simples, les polyméthylènediisocyanates monomères qui présentent des enchaînements polyméthylènes $(CH_2)_{\pi\pi}$où $\pi\pi$ représente un entier de 2 à 10, avantageusement de 4 à 8, et notamment l'hexaméthylènediisocyanate, l'un des méthylènes pouvant être substitués par un radical méthyle ou éthyle comme c'est le cas du MPDI (Méthyl Pentaméthylène DiIsocyanate);
- comme aliphatique partiellement "néopentylique" partiellement cyclique (cycloaliphatique) l'isophorone diisocyanate (IPDI) ;
- comme aliphatique cyclique (cycloaliphatique) diisocyanate ceux dérivés du norbornane ;
- les arylènedialcoylènediisocyanates (tels que $OCN-CH_2-\Phi-CH_2-NCO$ dont une partie ne présente pas de différence essentielle d'avec les aliphatiques, à savoir ceux dont la fonction isocyanate est distante des noyaux aromatiques d'au moins deux carbones tels que $(OCN-[CH_2]_t-\Phi-[CH_2]_u-NCO)$ avec t et u supérieur à 1 ;

⇒ ou encore aromatiques tels que le toluylène diisocyanate (toutefois les isocyanates aromatiques se prêtent mal à une mise en émulsion aqueuse).

Par fonction isocyanate aliphatique, l'on entend une fonction isocyanate portée par un carbone d'hybridation $sp^3$.

Les polyisocyanates préférés visés par la technique de l'invention sont ceux dans lesquels au moins une, avantageusement deux, de préférence trois des conditions ci après sont remplies :

- Au moins une, avantageusement au moins deux, plus préférentiellement la totalité, des fonctions NCO sont reliées à un squelette hydrocarboné, par l'intermédiaire d'un carbone saturé ($sp^3$), de préférence avec au moins une, plus préférentiellement au moins deux, des sous-conditions ci- après :
    - au moins un, avantageusement deux, desdits carbones saturés ($sp^3$) est porteur d'au moins un, avantageusement deux, hydrogène(s),(en d'autres termes, il a été trouvé que l'on obtenait de meilleurs résultats lorsque le carbone porteur de la fonction isocyanate était porteur d'un hydrogène, de préférence de deux hydrogènes) ;
    - au moins un, avantageusement deux, desdits carbones saturés ($sp^3$) sont eux-mêmes portés par un carbone, avantageusement aliphatique (c'est-à-dire d'hybridation $sp^3$), lui-même porteur d'au moins un, avantageusement deux, hydrogène(s) ; en d'autres termes, il a été trouvé que l'on obtenait de meilleurs résultats lorsque le carbone porteur de la fonction isocyanate n'était en position dite "néopentylique".
- Tous les carbones par l'intermédiaire desquels les fonctions isocyanates sont reliées au squelette hydrocarboné, sont des carbones saturés ($sp^3$), lesquels sont avantageusement en partie, de préférence en totalité, porteurs d'un hydrogène, de préférence de deux hydrogènes ; en outre, il est avantageux que lesdits carbones saturés ($sp^3$) soient au moins en partie (avantageusement 1/3, de préférence 2/3), préférablement en totalité, eux-mêmes portés par un carbone, avantageusement aliphatique (c'est-à-dire d'hybridation $sp^3$), lui-même porteur d'au moins un,

avantageusement deux, hydrogène(s) ; en d'autres termes, il a été trouvé que l'on obtenait de meilleurs résultats lorsque le carbone porteur de la fonction isocyanate n'était pas en position dite "néopentylique".

- Sont en particulier bien adaptés ceux qui présentent au moins en partie un squelette isocyanurique ou biuret (que ce squelette soit issu d'un seul ou de plusieurs monomères, voir ci-dessous) et plus précisément des structures de type isocyanurate, encore appelée trimère, des structures urétidinedione, encore appelée dimère, des structures biuret ou allophanate ou une combinaison de ce type de structures sur une seule molécule ou en mélange.

Lorsque les polyisocyanates sont relativement lourds, c'est-à-dire qu'ils comportent au moins 4 fonctions isocyanates, les deux premières conditions deviennent :

- Au moins 1/3, avantageusement 2/3, des fonctions NCO sont reliées à un squelette hydrocarboné, par l'intermédiaire d'un carbone saturé ($sp^3$).
- Au moins 1/3, avantageusement 2/3, desdits carbones saturés ($sp^3$) est porteur d'au moins un, avantageusement deux, hydrogène(s), (en d'autres termes, il a été trouvé que l'on obtenait de meilleurs résultats lorsque le carbone porteur de la fonction isocyanate était porteur d'un hydrogène, de préférence de deux hydrogènes. En outre, il est avantageux que lesdits carbones saturés ($sp_3$) soient au moins en partie (avantageusement 1/3, de préférence 2/3), préférablement en totalité, eux-mêmes portés par un carbone, avantageusement aliphatique (c'est-à-dire d'hybridation $sp^3$), lui-même porteur d'au moins un, avantageusement deux, hydrogène(s) ; en d'autres termes, il a été trouvé que l'on obtenait de meilleurs résultats lorsque le carbone porteur de la fonction isocyanate n'était en position dite "néopentylique".

Les isocyanates notamment aliphatiques peuvent réagir avec certains des composés anioniques visés par l'invention pour former des anhydrides ; ces anhydrides sont susceptibles de redonner les composés de formule (I) et dans certains cas réagissent comme des isocyanates masqués ; les réactions de formation de ces anhydrides, qui d'ailleurs peuvent être inhibées par une neutralisation complète des fonctions acides par une base forte, sont de deux types :

- soit élimination d'une molécule d'eau entre deux groupements fonctionnels anioniques et former ainsi une fonction de type E-O-E (c'est-à-dire une séquence pyrophosphorique dans le cas des phosphates) ;
- soit addition de l'hydroxyle des fonctions acides non ou mal neutralisées sur la fonction NCO pour former une fonction de séquence -NH-CO-O-E. Ces composés (anhydrides mixtes entre un acide carbamique et le groupement fonctionnel anionique) sont également visés par la présente invention.

Le premier cas correspond au cas où la première acidité a été imparfaitement neutralisée. Ces produits ont aussi d'excellentes propriétés tensioactives.

Au cours de la recherche qui a mené à la présente invention, il a pu être montré que la présence de molécules (correspondant au concept de solvant réactif) de bas poids moléculaire [c'est-à-dire au plus égale à 700 (2 chiffres significatifs), avantageusement à 600 (2 chiffres significatifs), de préférence à 500 (2 chiffres significatifs)], ne présentant ni structure hexacylique, ni de fonction biuret, ni même uréthanne, pouvait être corrélée à une bonne adhérence. De telles molécules sont des molécules ne présentant qu'au plus trois motifs diamines et sont essentiellement choisies parmi les dimères, les bis-dimères, les monoallophanates des polyméthylène diisocyanates et les monomères trifonctionnels du type LTI et NTI.

Ainsi avantageusement l'une au moins de ces molécules est présente dans la composition isocyanate a). Au total, ces molécules de bas poids moléculaire représentent une portion allant de 5 à 25%, avantageusement de 7 à 15%, en masse de la composition isocyanate a).

Les dimères, les bis-dimères sont préférés et représentent en masse avantageusement de 5 à 20%, de préférence au moins 7%, de la composition a). La quantité de solvant dans la composition isocyanate représente avantageusement au plus 20% en masse de la composition isocyanate a), de préférence au plus 10%, plus préférentiellement au plus 1 %.

Il est préférable pour des raisons de législation du travail que la quantité de monomère volatil du type hexaméthylène diisocyanate soit au plus égale à 1% en masse de la composition isocyanate a), avantageusement à 0,5%, de préférence à 0,2%, plus préférentiellement à 0, 1 %

Les exemples non limitatifs suivant illustrent l'invention.

**Composition émulsionnable selon la présente invention**

La composition émulsionnable d'isocyanate selon la présente invention, a été réalisée par addition d'un agent tensioactif (ou émulsifiant) de formule statistique (I) à une composition isocyanate préparée à partir d'hexaméthylène

diisocyanate trimérisé de viscosité inférieure d'au plus 1 200 mPa.s et comportant en masse:
8% (± 1%) de dimère vrai;
2% (± 1%) de bis-dimère ;
2% (± 1%) de biuret ;
55% (± 2%) de trimère vrai.
L'émulsifiant utilisé est de formule statistique (I)
où :

- q représente 0,3 ;
- s et r représentent 9, 5 ;
- p = 1,7 ;
- $R_1$ et $R_2$ sont des radicaux nonylphényles.
  L'amine utilisée pour la neutralisation est la N,N-diméthylhexylamine.
  L'acide phosphorique représentent 15% en mole du phosphore présent (en d'autres termes, le phosphore de l'acide phosphorique représente 15% de la totalité du phosphore présent).
  Seule, la première acidité des acides phosphorés présents a été neutralisée.
  Après addition la composition émulsionnable d'isocyanate comporte 7,5% (± 1 %) en masse de dimère vrai (c'est-à-dire à un seul motif urétidinedione et deux motifs diamine) et 3,5% en masse de composé de formule (I). Elle présente une viscosité de 1 400 mPa.s. (NCO = 21,7%)

**Le composé Desmodur® DN**

Il s'agit d'une composition du commerce comportant un taux élevé (au moins 70%) de trimère vrai (c'est-à-dire à un cycle isocyanurate et trois motifs diamine) et qui comporte en outre un tensioactif neutre issu de la condensation entre des oligomères d'isocyanate et un diol qui est un copolymère d'oxydes d'éthylène (46%) et de propylène (54%). La viscosité est de 1 250 mPa.s. (NCO= 21,8%)

**La composition à base HDT (produit de trimérisation de l'hexaméthylène diisocyanate)**

L'HDT testé est le produit courant issu de la trimérisation avec moins de 2% de dimère à une viscosité de 2 400 mPa.s, auquel on a ajouté 11 % du produit de formule (i) spécifié ci dessus.
Cette composition est autoémulsionnable.
Viscosité finale 4 300 mPa.s.
NCO = 19%
Pourcentage de tensioactif après addition = 10%

**Test à la spatule**

Le test à la spatule est un test qualitatif dans lequel le composé testé est prélevé du contenant au moyen de la partie plate d'une spatule et est agité dans de l'eau pendant 2 minutes. S'il reste visiblement du produit au bout de la spatule le test est négatif. Ce test d'usage est un bon indicatif de la facilité à mettre en oeuvre.
Tous les tests sont réalisés avec une teneur en composition isocyanate de 4% massique.
Les mesures de granulométrie sont réalisées avec l'appareil (HORIBA LA 910)

**Exemple 1 : Collage du bois - Etude comparative d'une composition selon la présente invention avec des compositions isocyanates usuelles**

Le polymère vinNac DPN15 est une dispersion d'homopolymère d'acétate de vinyle à 52% d'extrait sec.
Les tests sont réalisés selon la norme EN205/94-D4 ; les essais de rupture sont réalisés sur des éprouvettes maintenues pendant 7 jours à température ambiante selon la norme E 204.
Les résultats sont rassemblés dans le tableau suivant :

| Isocyanate Testé | Test spatule | Isocyanate seul | | VinNac DPN15 | | Mélange | | Résistance à la rupture en Mpa sur Hêtre (fagus silvestris) |
|---|---|---|---|---|---|---|---|---|
| | | $d_{50}$ médian | « I » : indice de polydispersité $=d_{10}-d_{90}/d_{50}$ | $d_{50}$ | « I » | $d_{50}$ (μm) | « I » | |
| Produit selon l'invention | + | 22 μm | 0,926 | 1,16 μm | 12,4 | 1,047 | 0,728 | 14 |
| Desmodur® DN | + | 19 μm | 1,6 | | | 1,158 | 0,984 | 11 Mpa |
| Trimère dHDT (comparatif) | - | 0,09 μm | 0,845 | | | 1,128 | 17,2 | 14. |

**Exemple 2: Collage d'élastomère (chaussures de sport) - Etude comparative d'une composition selon la présente invention avec des compositions isocyanates usuelles**

Le polymère utilisé est le dispercoll® U54 (voire notice technique en date du lundi 31 janvier 2000). Il s'agit d'une dispersion de polyuréthanne à 50% de polymère sec.
Les tests sont menés selon la norme DIN EN 1392, les éprouvettes sont séchées pendant 4 jours à température ambiante (23°C), les résistances à la rupture sont mesurées selon la norme DIN 205/91.

| Produit testé | Test spatule | Isocyanate | | Dispercoll U54 | | Mélange | |
|---|---|---|---|---|---|---|---|
| | | $d_{50}$ médian | $(d_{10}-d_{90})/d_{50}$ | $d_{50}$ | $d_{10}-d_{90}/d_{50}$ | $D_{50}$ | $d_{10}-d_{90}/d_{50}$ |
| Invention | + | 22 μ | 0,926 | 166 nm | 0,48 | 2,8 μ | 16 |
| Desmodur DN | + | 19 μ | 1,6 | | | Bipopulé 215 nm + 22 μ (19%) | 92 |
| HDT | - | 0,09 μ | 0,845 | | | | 0,55 |

| Produit testé | Pelage : sur CPU sec DIN EM1392 | Pelage : sur NBR milieu sec | Pelage sur C-PU humide | Pelage sur NBR humide |
|---|---|---|---|---|
| | | | | |
| Invention | 1 | 0,69 | 0,95 | 0,67 |
| Desmodur® DN | 1,02 | 0,67 | 0,64 | 0,47 |
| HDT | 1,1 | 0,73 | 0,67 | 0,5 |
| Disperscoll® U 54 seul | 0,58 | 0,19 | | |

## Revendications

1. Utilisation pour la préparation d'une émulsion pour adhésif d'une composition comportant pour addition successive ou simultanée

   - une composition isocyanate a) d'une teneur massique en fonction N=C=O comprise entre 10% et 30% (bornes comprises), avantageusement de 15 à 25% (bornes comprises), d'une viscosité au plus égale à 2 500 mPa.s

et dont la taille de particule $d_{50}$ soit au plus égale à 25 µm, de préférence au plus égale à 22 µm, pour un indice de polydispersité au plus égal à 1,5, avantageusement au plus égal à 1,3;
- un agent tensioactif b) comportant comme constituant principal (c'est- à- dire au moins 50% massique) un composé ou mélange de composés de formule générale moyenne :

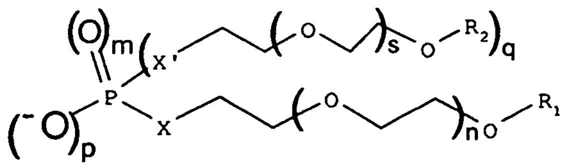

où:

- p représente une valeur entre 1 et 2 (intervalles fermés, c'est-à-dire comprenant les bornes);
- m représente zéro ou 1;
- la somme p + m + q est égale à 3;
- la somme 1 + p + 2m + q est égale à 3 ou à 5, avantageusement à 5;
- X est un oxygène;
- X' est un oxygène;
- n et s, ont la même valeur statistique, choisie entre 5 et 30, avantageusement entre 5 et 25, de préférence entre 9 et 20 (intervalles fermés, c'est-à-dire comprenant les bornes);
- $R_1$ et $R_2$, différents ou identiques, sont choisis parmi les radicaux aryliques substitués ou non.

2. Utilisation selon la revendication 1, **caractérisée par le fait que** la viscosité est au plus égale à 2 000, avantageusement à 1 500 mPa.s, de préférence à 1 400 mPa.s, plus préférentiellement à 1 200 mPa.s.

3. Utilisation selon l'une des revendications 1 et 2, **caractérisée par le fait que** le rapport entre la masse de l'agent b) (numérateur) et la masse de la composition a) (dénominateur) est dans l'intervalle fermé (c'est-à-dire contenant les bornes) allant de 2 à 10%, avantageusement de 3 à 7%.

4. Utilisation selon l'une des revendications 1 à 3, **caractérisée par le fait que** la somme p + q est égale à 2.

5. Utilisation selon les revendications 1 à 4, **caractérisée par le fait que** ladite composition isocyanate a) comporte au moins 50%, avantageusement 70%, en masse d'oligomères choisis parmi les hétéro- ou homo-oligomères dont au moins un des monomères est un monomère aliphatique, avantageusement dont tous les monomères sont des monomères aliphatiques choisis parmi ceux porteurs d'au moins deux fonctions isocyanates et dont le squelette, sur le trajet le plus court joignant 2 fonctions isocyanate comporte au moins un enchaînement polyméthylène d'au moins 2 maillons méthylène $(CH_2)_\pi$ ($\pi \geq 2$), exocyclique lorsque le monomère comporte un cycle.

6. Utilisation selon l'une des revendications 1 à 5, **caractérisée par le fait que** ladite composition isocyanate a) comporte une portion de solvant réactif comportant au moins une molécule choisie parmi les dimères, les bis-dimères, les monoallophanates des polyméthylènes diisocyanates et les monomères bi tri- voire tétra-fonctionnels de masse moléculaire au moins égale à 200.

7. Utilisation selon la revendication 6, **caractérisée par le fait que** ladite portion représente une portion allant de 5 à 20% en masse de la composition isocyanate a).

8. Utilisation selon l'une des revendications 6 et 7, **caractérisée par le fait que** les dimères et les bis-dimères représentent en masse avantageusement de 5 à 20%, de préférence au moins 7%, de la composition a).

9. Composition pour adhésif, **caractérisée par le fait qu'**elle comporte pour addition successive ou simultanée :

- une composition isocyanate a) d'une teneur massique en fonction N=C=O comprise entre 10% et 30% (bornes comprises), avantageusement de 15 à 25% (bornes comprises), d'une viscosité au plus égale à 2 500 mPa.s, dont la taille de particule $d_{50}$ soit au plus égale à 25 µm, de préférence à 22 µm, pour un indice de polydispersité au plus égal à 1,5, avantageusement au plus égal à 1,3; et qui comprend de 5 à 20% en masse de solvant

réactif comportant au moins une molécule choisie parmi les dimères, les bis-dimères, les monoallophanates des polyméthylènes diisocyanates et les monomères bi tri- ou tétra-fonctionnels de masse moléculaire au moins égale à 200;

- un agent tensioactif b) comportant comme constituant principal (c'est-à-dire au moins 50% massique) un composé ou mélange de composés de formule générale moyenne :

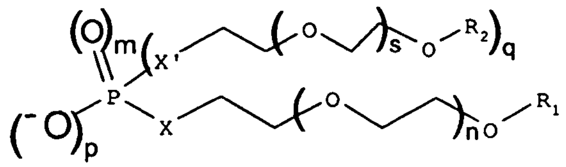

où :

- p représente une valeur entre 1 et 2 (intervalles fermés, c'est-à-dire comprenant les bornes) ;
- m représente zéro ou 1;
- la somme p + m + q est égale à 3 ;
- la somme 1 + p + 2m + q est égale à 3 ou à 5, avantageusement à 5;
- X est un oxygène ;
- X' est un oxygène ;
- n et s, ont la même valeur statistique, choisie entre 5 et 30, avantageusement entre 5 et 25, de préférence entre 9 et 20 (intervalles fermés, c'est-à-dire comprenant les bornes) ;
- $R_1$ et $R_2$, différents ou identiques, sont choisis parmi les radicaux aryliques substitués ou non;

- une phase aqueuse de pH compris entre 4 et 9, avantageusement porteuse d'un polymère adhésif en soi connu.

## Claims

**1.** Use for preparing an emulsion for adhesive of a composition comprising for successive or simultaneous addition

- an isocyanate composition a) with a mass content of N=C=O function of between 10% and 30% (limits inclusive) and advantageously from 15% to 25% (limits inclusive) and with a viscosity of not more than 2500 mPa.s and whose particle size $d_{50}$ is not more than 25µm, preferably not more than 22 µm, for a polydispersity index of not more than 1.5, advantageously not more than 1.3;
- a surfactant b) comprising as main constituent (i.e. at least 50% by mass) a compound or a mixture of compounds of mean general formula:

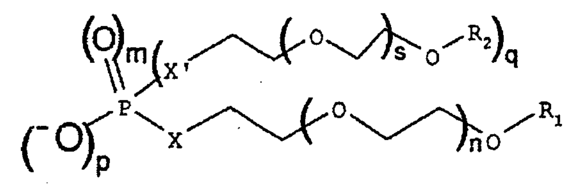

in which:

- p represents a value between 1 and 2 (closed intervals, i.e. comprising the limits);
- m represents zero or 1;
- the sum p+m+q is equal to 3;
- the sum 1+p+2m+q is equal to 3 or 5, advantageously 5;
- X is an oxygen;

X' is an oxygen;

- n and s have the same statistical value, chosen between 5 and 30, advantageously between 5 and 25 and preferably between 9 and 20 (closed intervals, i.e. including the limits);
- $R_1$ and $R_2$, which are identical or different, are chosen from substituted or unsubstituted aryl radicals.

2. Use according to Claim 1, **characterized in that** the viscosity is not more than 2000, advantageously not more than 1500 mPa.s, preferably not more than 1400 mPa.s and more preferentially not more than 1200 mPa.s

3. Use according to either of Claims 1 and 2, **characterized in that** the ratio between the mass of the agent b) (numerator) and the mass of composition a) (denominator) is within the closed interval (i.e. including the limits) ranging from 2% to 10% and advantageously from 3% to 7%.

4. Use according to one of Claims 1 to 3, **characterized in that** the sum p+q is equal to 2.

5. Use according to Claims 1 to 4, **characterized in that** said isocyanate composition a) comprises at least 50% and advantageously 70% by mass of oligomers chosen from hetero- and homooligomers in which at least one of the monomers is an aliphatic monomer, advantageously in which all of the monomers are aliphatic monomers chosen from those bearing at least two isocyanate functions and in which the skeleton, on the shortest trajectory connecting two isocyanate functions, comprises at least one polymethylene sequence of at least two methylene chain units $(CH_2)_\pi$ ($\pi \geq 2$), which is exocyclic when the monomer comprises a ring.

6. Use according to one of Claims 1 to 5, **characterized in that** said isocyanate composition a) comprises a portion of reactive solvent comprising at least one molecule chosen from dimers, bis-dimers, polymethylene diisocyanate monoallophanates and di-, tri- or even tetra-functional monomers with a molecular mass at least equal to 200.

7. Use according to Claim 6, **characterized in that** said portion represents a portion ranging from 5% to 20% by mass of the isocyanate composition a).

8. Use according to either of Claims 6 and 7, **characterized in that** the dimers and bis-dimers represent by mass advantageously from 5% to 20% and preferably at least 7% of the composition a).

9. Adhesive composition, **characterized in that** it comprises, for successive or simultaneous addition:

- an isocyanate composition a) with a mass content of N=C=O function of between 10% and 30% (limits inclusive) and advantageously from 15% to 25% (limits inclusive) and with a viscosity of not more than 2500 mPa.s, whose particle size $d_{50}$ is not more than 25μm, preferably not more than 22 μm, for a polydispersity index of not more than 1.5, advantageously not more than 1.3; and which comprises from 5 to 20% by mass of reactive solvent comprising at least one molecule chosen from dimers, bis-dimers, polymethylene diisocyanate monoallophanates and di-, tri- or tetra-functional monomers with a molecular mass at least equal to 200;
- a surfactant b) comprising as main constituent (i.e. at least 50% by mass) a compound or mixture of compounds of general formula:

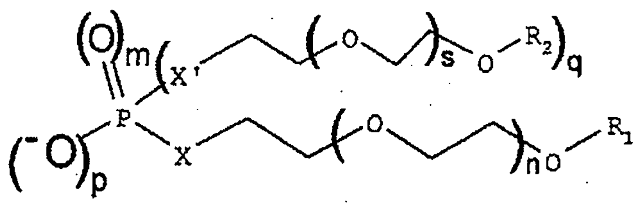

in which:

- p represents an integer between 1 and 2 (closed intervals, i.e. including the limits);
- m represents zero or 1;
- the sum p+m+q is equal to 3;
- the sum 1+p+2m+q is equal to 3 or 5, advantageously to 5;

- X is an oxygen;
- X' is an oxygen;
- n and s, which may be identical or different, represent an integer chosen between 5 and 30, advantageously between 5 and 25 and preferably between 9 and 20 (closed intervals, i.e. including the limits);
- $R_1$ and $R_2$, which are identical or different, are chosen from substituted or unsubstituted aryl radicals;
- $R_1$ and $R_2$ usually represent an alkylaryl of 10 to 20 carbon atoms,

- an aqueous phase with a pH of between 4 and 9, advantageously bearing an adhesive polymer that is known per se.

**Patentansprüche**

1. Verwendung einer Zusammensetzung zur Herstellung einer Klebstoff-Emulsion, umfassend, zur aufeinanderfolgenden oder gleichzeitigen Zugabe:

   - eine Isocyanatzusammensetzung a) mit einem Massegehalt an N=C=O-Funktion zwischen 10 % und 30 % (Grenzen eingeschlossen), zweckmäßigerweise von 15 bis 25 % (Grenzen eingeschlossen), mit einer Viskosität von höchstens gleich 2500 mPa.s, und deren Teilchengröße $d_{50}$ höchstens gleich 25 μm, vorzugsweise höchstens gleich 22 μm beträgt, für einen Polydispersitätsindex von höchstens gleich 1,5, zweckmäßigerweise von höchstens gleich 1,3;
   - ein grenzflächenaktives Mittel b), das als Hauptbestandteil (d. h. mindestens 50 Masse-%) eine Verbindung oder ein Gemisch von Verbindungen der allgemeinen durchschnittlichen Formel:

   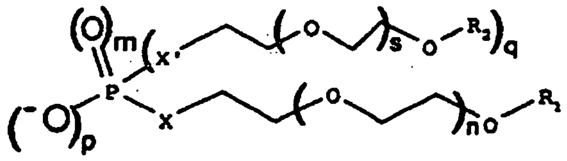

   umfasst,
   wobei:
   - p einen Wert zwischen 1 und 2 (geschlossene Intervalle, d. h. Grenzen eingeschlossen) darstellt;
   - m 0 oder 1 darstellt;
   - die Summe p + m + q gleich 3 ist;
   - die Summe 1 + p + 2m + q gleich 3 oder 5 ist, zweckmäßigerweise 5 ist;
   - X ein Sauerstoff ist;
   - X' ein Sauerstoff ist;
   - n und s den gleichen statistischen Wert besitzen, der zwischen 5 und 30, zweckmäßigerweise zwischen 5 und 25, vorzugsweise zwischen 9 und 20 (geschlossene Intervalle, d. h. die Grenzen mit eingeschlossen) ausgewählt ist;
   - $R_1$ und $R_2$, verschieden oder gleich, aus den substituierten oder unsubstituierten Arylresten ausgewählt sind.

2. Verwendung nach Anspruch 1, **dadurch gekennzeichnet, dass** die Viskosität höchstens gleich 2000, zweckmäßigerweise 1500 mPa.s, vorzugsweise 1400 mPa.s, stärker bevorzugt 1200 mPa.s beträgt.

3. Verwendung nach einem der Ansprüche 1 und 2, **dadurch gekennzeichnet, dass** das Verhältnis zwischen der Masse des Mittels b) (Zähler) und der Masse der Zusammensetzung a) (Nenner) in dem geschlossenen Intervall (d. h. die Grenzen mit eingeschlossen) von 2 bis 10 %, zweckmäßigerweise von 3 bis 7 % liegt.

4. Verwendung nach einem der Ansprüche 1 bis 3, **dadurch gekennzeichnet, dass** die Summe p + q gleich 2 ist.

5. Verwendung nach einem der Ansprüche 1 bis 4, **dadurch gekennzeichnet, dass** die Isocyanatzusammensetzung a) mindestens 50 %, zweckmäßigerweise 70 Masse-% an Oligomeren enthält, ausgewählt aus Hetero- oder Homooligomeren, bei denen mindestens eines der Monomere ein aliphatisches Monomer ist, zweckmäßigerweise bei denen alle Monomere aliphatische Monomere sind, die aus solchen ausgewählt sind, die mindestens 2 Isocyanatfunktionen tragen und deren Skelett auf der kürzesten Strecke, die zwei Isocyanatfunktionen verknüpft, mindestens eine Polymethylenverknüpfung mit mindestens zwei Methylengliedern $(CH_2)_\pi$ ($\pi \geq 2$), exocyclisch, wenn das Monomer einen Cyclus enthält, umfasst.

**6.** Verwendung nach einem der Ansprüche 1 bis 5, **dadurch gekennzeichnet, dass** die Isocyanatzusammensetzung a) einen Anteil an reaktivem Lösungsmittel enthält, das mindestens ein Molekül umfasst, ausgewählt aus den Dimeren, den Bis-Dimeren, den Monoallophanaten von Polymethylendiisocynaten und aus den bi-, tri-, sogar tetrafunktionellen Monomeren mit einer Molekülmasse von mindestens gleich 200.

**7.** Verwendung nach Anspruch 6, **dadurch gekennzeichnet, dass** der Anteil einen Anteil von 5 bis 20 Masse-% der Isocyanatzusammensetzung a) darstellt.

**8.** Verwendung nach einem der Ansprüche 6 und 7, **dadurch gekennzeichnet, dass** die Dimere und die Bis-Dimere massebezogen zweckmäßigerweise 5 bis 20 %, vorzugsweise mindestens 7 % der Zusammensetzung a) darstellen.

**9.** Klebstoff-Zusammensetzung, **dadurch gekennzeichnet, dass** sie zur aufeinanderfolgenden oder gleichzeitigen Zugabe folgendes umfasst:

- eine Isocyanatzusammensetzung a) mit einem Massegehalt an N=C=O-Funktion zwischen 10 % und 30 % (Grenzen eingeschlossen), zweckmäßigerweise zwischen 15 und 25 % (Grenzen eingeschlossen), mit einer Viskosität von höchstens gleich 2500 mPa.s, deren Teilchengröße $d_{50}$ höchstens gleich 25 $\mu$m beträgt, vorzugsweise 22 $\mu$m, für einen Polydispersitätsindex von höchstens gleich 1,5, zweckmäßigerweise von höchstens gleich 1,3; und die 5 bis 20 Masse-% eines reaktiven Lösungsmittels enthält, das mindestens ein Molekül umfasst, ausgewählt aus den Dimeren, den Bis-Dimeren, den Monoallophananten von Polymethylendiisocyanaten und aus den bi-, tri-, oder tetra-funktionellen Monomeren mit einer Molekülmasse von mindestens gleich 200;
- ein grenzflächenaktives Mittel b), das als Hauptbestandteil (d. h. mindestens 50 Masse-%) eine Verbindung oder ein Gemisch von Verbindungen der allgemeinen durchschnittlichen Formel:

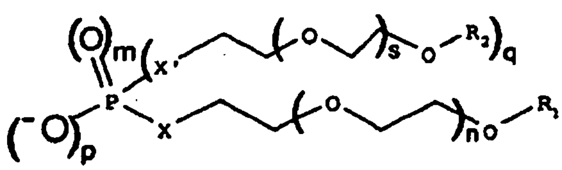

umfasst,
wobei:

- p einen Wert zwischen 1 und 2 (geschlossene Intervalle, d. h. Grenzen eingeschlossen) darstellt;
- m 0 oder 1 darstellt;
- die Summe p + m + q gleich 3 ist;
- die Summe 1 + p + 2m + q gleich 3 oder 5 ist, zweckmäßigerweise 5 ist;
- X ein Sauerstoff ist;
- X' ein Sauerstoff ist;
- n und s den gleichen statistischen Wert besitzen, der zwischen 5 und 30, zweckmäßigerweise zwischen 5 und 25, vorzugsweise zwischen 9 und 20 (geschlossene Intervalle, d. h. Grenzen eingeschlossen) ausgewählt ist;
- $R_1$ und $R_2$, verschieden oder gleich, aus substituierten oder unsubstituierten Arylresten ausgewählt sind;

- eine wässrige Phase mit einem pH-Wert zwischen 4 und 9, die zweckmäßigerweise ein klebendes, an sich bekanntes Polymer trägt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2745577
- WO 9910402 A
- FR 2760242 A
- WO 0105861 A
- WO 9907765 A
- WO 9955756 A